# EUROPEAN PATENT SPECIFICATION

(11) **EP 1 734 431 B1**
(45) Date of publication and mention of the grant of the patent: **29.10.2014**
(21) Application number: 05726712.2
(22) Date of filing: 17.03.2005
(51) Int. Cl.: G05B 19/42, B25J 9/22, G05B 19/042

(54) **INDUSTRIAL ROBOT**
INDUSTRIEOBOTER
ROBOT INDUSTRIEL

(30) Priority: 31.03.2004 JP 2004103789
(43) Date of publication of application: 20.12.2006
(73) Proprietor: Panasonic Corporation, Kadoma-shi Osaka 571-8501 (JP)
(72) Inventor: IKEDA, Tatsuya, Hyogo 666-0142 (JP); OCHIAI, Kazuhito, Osaka 560-0052 (JP)
(74) Representative: Grünecker, Kinkeldey, Stockmair & Schwanhäusser
(86) International application number: PCT/JP2005/004787
(87) International publication number: WO 2005/098560

(56) References cited:
- EP-A1- 0 791 373
- EP-B1- 1 379 942
- JP-A- 5 250 030
- JP-A- 5 250 030
- JP-A- 11 110 027

## Description

### Technical Field

The present invention relates to an industrial robot in which software is installed respectively in a teach pendant for operating the robot and in a control unit for controlling the robot in its entirety.

### Background Art

Generally, in a structure of an industrial robot, a teach pendant which enables an operator to operate the robot is connected to a control unit, separately from the control unit for controlling the robot in its entirety.

In recent years, as multifunctional and intelligent industrial robots have been developed, there is a tendency that the control unit for controlling the robot in its entirety is equipped with a multifunctional CPU and a real time operation system for realizing high precision and high speed process, and on the other hand, the teach pendant is equipped with an operation system and applications for realizing user interface of color liquid crystal and graphics.

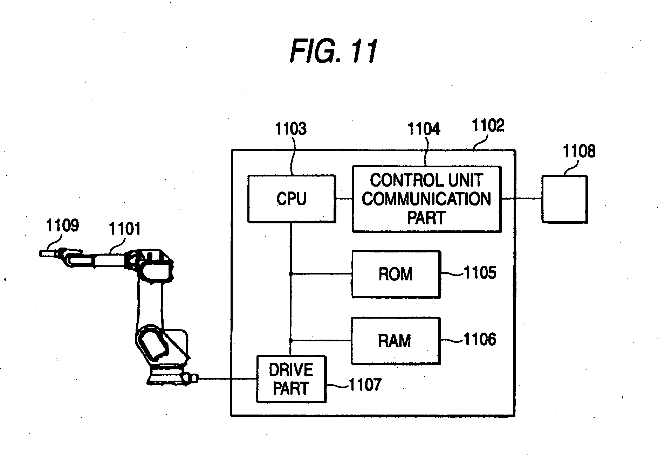

Fig. 11 shows a structure of the above described industrial robot, in which 1101 is a manipulator, 1109 is a tool such as a welding torch, or a hand opening device which is attached to the industrial robot according to its object for use, 1102 is a control unit for controlling the robot in its entirety, 1108 is a teach pendant for operating the manipulator and the control unit, 1103 is a CPU for controlling the control unit itself, 1104 is a communication part of the control unit for communicating with the teach pendant, 1105 is a ROM which is a read-only memory storing control unit software (not shown) to be interpreted by the CPU for operation, 1106 is a RAM which is a writable and readable memory storing operation programs and operation environment setting data which have been taught by the operator, and 1107 is a drive part for driving the manipulator.

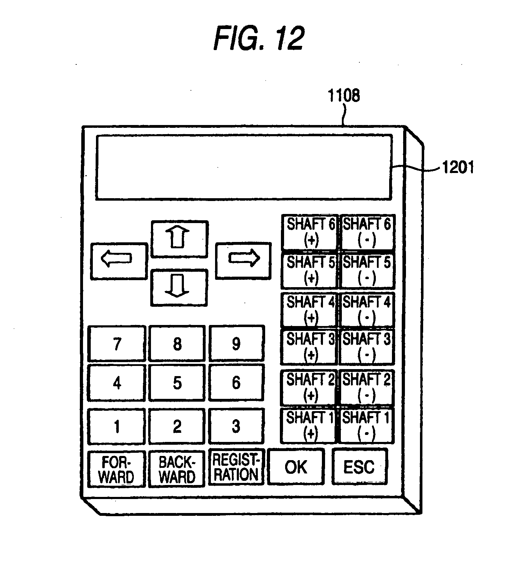

Then, an example of the teach pendant is shown in Fig. 12. In the teach pendant 1108, there are arranged a display part 1201 in which character string and graphical information are displayed, and keys (not shown by reference numerals) in a form of push-button switches for conducting operation of the manipulator 1101 and teaching works.

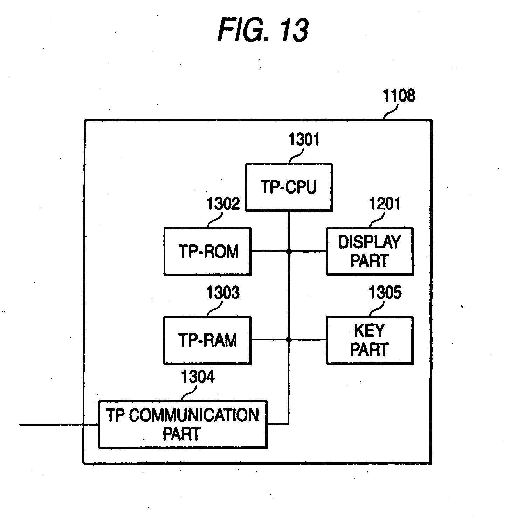

Now, an interior structure of the teach pendant is shown in Fig. 13. In the teach pendant 1108, 1301 is a TP-CPU for controlling the teach pendant itself, 1304 is a TP-communication part for communicating with the control unit 1102, 1302 is a TP-ROM which is a read-only memory storing TP software (not shown) to be interpreted by the TP-CPU for operation, 1303 is a TP-RAM which is a readable memory and temporarily stores data for manipulation by the TP-CPU, 1201 is a display part which is identical to the display part 1201 as shown in Fig. 12, and 1305 is a key part. The control unit software which is stored in the ROM 1105 in the control unit 1102 is exclusively for the control unit, while the TP software which is stored in the TP-ROM in the teach pendant 1108 is exclusively for the teach pendant, and the software in both the memories are different from each other. However, there may be an inconvenience that a part or all of functions of the robot will not be properly operated, unless the software is consistent with each other.

Operation of the industrial robot having the above described structure will be described. The operator operates the manipulator 1101, using the teach pendant 1108. A command for operation from the teach pendant 1108 will be transmitted to the CPU 1103 through the control unit communication part 1104, and the CPU 1103 will control the drive part 1107 to operate the manipulator 1101. The operator operates the manipulator 1101 to take an intended position and posture, and conducts registration of teaching points, whereby the position and posture of the manipulator 1101 are stored in the RAM 1106. By continuing this operation, an operation program will be prepared. In case where the operation program is continuously operated for enabling the industrial robot to do works such as welding or handling, the operator will select the intended operation program, using the teach pendant 1108, and conduct starting operation, whereby the CPU 1103 will interpret the operation program to control the manipulator 1101 continuously. In this manner, it is possible to continuously run the desired operation.

The software which is installed in the industrial robot will be frequently updated for reasons of improvement of functions, change in the object for use of the robot, or amendment of defective operation, etc. The industrial robot is shipped from a manufacturer with the software which has been stored in the ROM during production. On the other hand, in case of updating the software in the robot which has been already supplied to a user, a method of exchanging the ROM by itself or together with a printed board has been generally taken.

Alternatively, there has been proposed such a method that the robot has been connected to a host computer by a communication network in advance, and software is transferred from the host computer through the communication network so that the software in the ROM may be rewritten (Reference should be made to Patent Document 1, for example).

Patent Document 1: Japanese Patent Publication No. JP-A-08-263125

European patent EP 1 379 942 B1 describes a programming device for programming a control device for an industrial process. The programming device stores a plurality of software modules which can be transferred to the control device for controlling an industrial process. As a rule, not all the software modules available in the storage of the programming device are, at the same time, present in the control device. Also, a situation may occur where the control device stores modules not present in the programming device (cf. dependent claim 4). The presence of software modules is checked between the programming device and the control device, and any non-matching software modules between the two devices are indicated to a user.

Document JP 5 250030 A describes a robot that is operated via a teaching device. The teaching device communicates with a control panel of the robot. In case of a software update of the robot, by exchanging a ROM module of the control panel, whereon the software is stored, software of the teaching device is changed/updated at the same time. Therefore, the software of the teaching device is stored in a re-writable memory and is updated by re-writing over the communication channel from the control panel.

Document EP 0 791 373 A1 describes implantable medical devices (such as a cardiac pacemaker) which communicate with an external component called "programmer". The programmer is capable of reading data from an implanted device, but is also capable of sending particular data to the implanted device, in order to "re-program" the implanted device, i.e. modify functional parameters thereof. Programming is preferably performed by means of an object-oriented code.

### Disclosure of the Invention

### Problems that the Invention is to Solve

At a worksite, the operator frequently modifies daily teachings or setting data, using the teach pendant. For example, in case of a welding robot, the operator is required to modify positions of teaching points or welding conditions according to working precision and condition of a surface of a member to be welded.

However, it sometimes happens that the operator drops the teach pendant by mistake while handling the teach pendant, or stumbles over a connecting cable to break the teach pendant, and the teach pendant must be exchanged.

In this case, because the control unit software which is stored in the ROM in the control unit is exclusively for the control unit, and the TP software which is stored in the TP-ROM in the teach pendant is exclusively for the teach pendant, and the software in both the memories are different from each other, as described above, there may be such an inconvenience that a part or all of the functions of the robot will not be properly operated, unless the software is consistent with each other.

Therefore, it is necessary to make the TP software in the teach pendant which has been exchanged consistent with the control unit software in the control unit.

In other words, the software of either one or both of the units according to necessity must be updated. For this purpose, generally, it is necessary to exchange the ROM by itself or together with the printed board, as described above, and an appropriate person who can do the work must conduct the updating work.

Similarly, in case where the printed board in the control unit or so has been broken for some reason, and the ROM in the control unit which stores the control unit software has been exchanged, the robot will not be properly operated, unless the control unit software in the control unit is consistent with the TP software in the teach pendant, for the same reason as described above. Therefore, consistency between the control unit software in the control unit and the TP software in the teach pendant must be obtained.

Updating these software must be performed by a person who can do the work, and in many cases, a serviceman of the manufacturer will visit the user of the supplied robot to perform the work. Under the circumstances, there is a problem that a maintenance cost may be increased, and a production line at the user of the supplied robot must be stopped for a long time.

The present invention aims to solve the above problem and to provide an improved industrial robot and method of controlling thereof.

### Means for Solving the Problems

This is achieved by the features of the independent claims.

### Advantage of the Invention

As described above, the industrial robot is provided with the teach pendant for operating the robot,and the control unit for controlling the robot in its entirety to which the teach pendant and the manipulator are connected. The robot is further provided with the consistency judging function for judging whether or not the software in the teach pendant is consistent with the software in the control unit. Therefore, it is possible to display a state of inconsistency in the teach pendant, in case where inconsistency has happened, and it is possible to automatically update the software of at least one of the teach pendant and the control unit. As the results, in case where a printed board in the teach pendant or in the control unit has been broken, it would be unnecessary to wholly exchange a ROM in which the software is stored together with the printed board. Accordingly, it is possible to realize an excellent industrial robot in which increases of working cost and downtime of production line at a user of the supplied robot can be prevented.

### Brief Description of the Drawings

Fig. 1 is a block diagram showing a structure of an industrial robot in Embodiment 1 of the invention.
Fig. 2 is a block diagram showing a structure of a teach pendant in Embodiment 1 of the invention.
Fig. 3 is a flow diagram showing process for judging consistency of software in Embodiment 1 of the invention.
Fig. 4 is a flow diagram showing process for comparing version information in Embodiment 1 of the invention.
Fig. 5 is a view showing an example where abnormal condition of version consistency is displayed in Embodiment 2 of the invention.
Fig. 6 is a flow diagram showing process for comparing version information in Embodiment 3 of the invention.
Fig. 7 is a flow diagram showing process for updating TP software in Embodiment 3 of the invention.
Fig. 8 is a flow diagram showing process for updating control unit software in Embodiment 3 of the invention.
Fig. 9 is a block diagram showing a structure of a control unit in Embodiment 4 of the invention.
Fig. 10 is a block diagram showing a structure of a teach pendant in Embodiment 4 of the invention.
Fig. 11 is a block diagram showing a structure of a conventional industrial robot.
Fig. 12 is a view showing an example of the teach pendant in the conventional industrial robot.
Fig. 13 is a block diagram showing a structure of the teach pendant in the conventional industrial robot.

### Best Mode for Carrying Out the Invention

### (Embodiment 1)

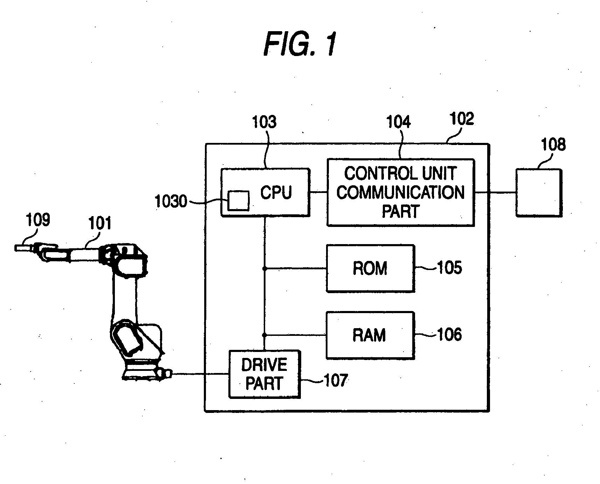

Now, the best mode for carrying out the invention will be described referring to Figs. 1 to 4. Fig. 1 shows a structure of an industrial robot which realizes the invention. In Fig. 1, 101 is a manipulator, 109 is a tool such as a welding torch or a hand opening unit which is attached to the industrial robot according to its object for use, 102 is a control unit for controlling the robot in its entirety, 108 is a teach pendant for operating the manipulator and the control unit, 103 is a CPU for controlling the control unit itself which includes consistency judging means 1030 thereby to judge consistency of software, 104 is a communication part of the control unit for communicating with the teach pendant 108, 105 is a ROM which is a read-only memory storing control unit software (not shown) to be interpreted by the CPU for operation, 106 is a RAM which is a writable and readable memory storing operation programs and operation environment setting data which have been taught by the operator, and 107 is a drive part for driving the manipulator.

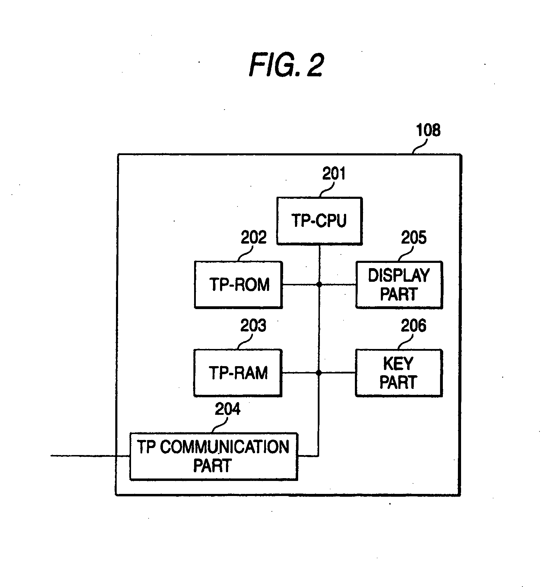

Then, an interior structure of the teach pendant is shown in Fig. 2. In the teach pendant, 201 is a TP-CPU for controlling the teach pendant itself, 204 is a TP communication part for communicating with the control unit 102, 202 is a TP-ROM which is a read-only memory storing TP software (not shown) to be interpreted by the TP-CPU for operation, 203 is a TP-RAM which is a readable memory temporarily storing data for the TP-CPU to perform manipulation, 205 is a display part, and 206 is a key part.

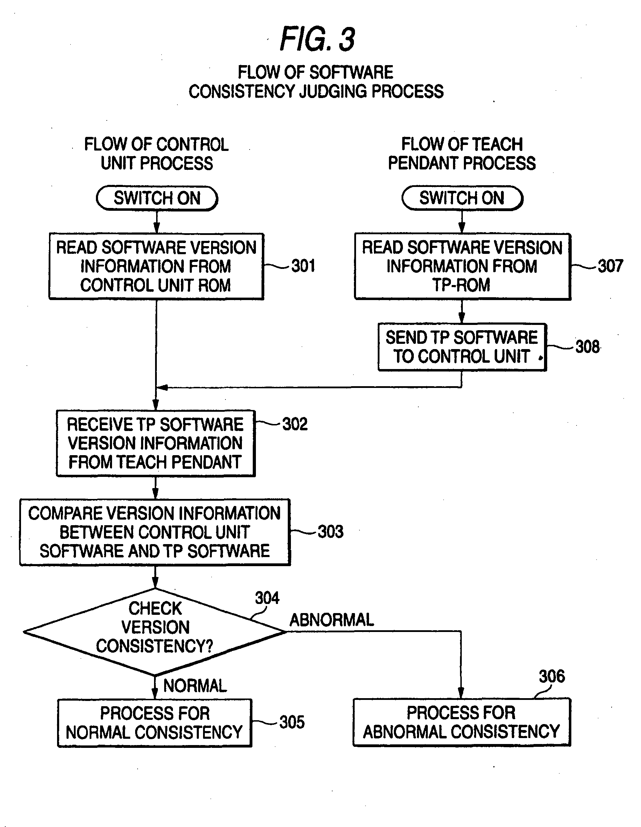

Then, steps for carrying out the invention will be described referring to Fig. 3. The teach pendant 108 is connected to the control unit 102, and power of the teach pendant 108 is supplied from the control unit 102. Therefore, when the power of the control unit 102 is turned on, the power of the teach pendant 108 will be also turned on. The control unit software which is stored in the ROM 105 in the control unit 102 contains version information of the control unit software itself. On the other hand, the TP software which is stored in the TP-ROM 202 in the teach pendant 108 contains version information of the TP software itself. When the power is turned on, the CPU 103 in the control unit 102 will read the version information of the control unit software from the ROM 105 at step 301 of the flow in Fig. 3, and will wait for the TP version information from the teach pendant 108.

Meanwhile, when the power is turned on, the TP-CPU 201 in the teach pendant 108 will read the version information of the TP software from the TP-ROM 202 at step 307 of the flow in Fig. 3, and at the next step 308, the TP-CPU will transmit the version information of the TP software to the control unit 102 via the TP communication part 204. Then, at step 302 of the flow, the CPU 103 in the control unit 102 will receive the version information of the TP software via the control unit communication part 104.

Then, at step 303 of the flow, the CPU 103 in the control unit 102 performs pretreatment for comparing the version information of the control unit software which was read at the step 301 with the version information of the TP software which was received at the step 302. After the comparison has been made at step 304, in case where the consistency of the version information between the control unit software and the TP software is normal, process in case of the normal consistency will be conducted at step 305. In case where the consistency of the version information between the control unit software and the TP software is abnormal, process in case of the abnormal consistency will be conducted at step 306. The processes in case of the normal consistency and in case of the abnormal consistency are not particularly restricted herein, but it is possible to employ processes which will be described below, for example.

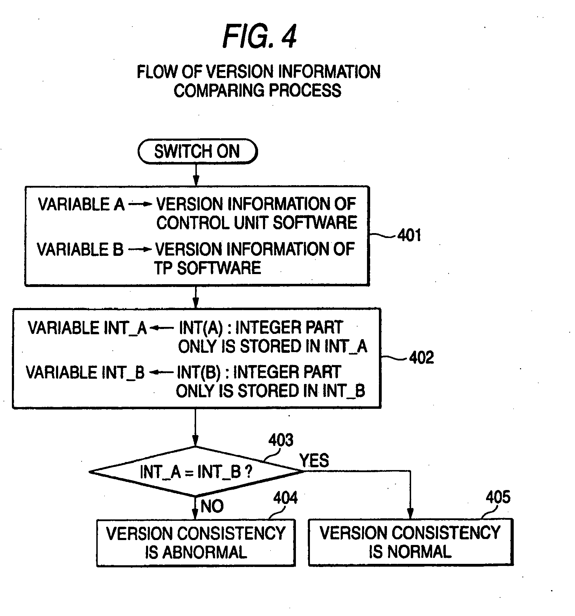

Now, referring to Fig. 4, an example of the version information comparing process at the steps 303 and 304 will be described. It is assumed that version symbols of the control unit software and the TP software are defined by numerical values up to one digit below the decimal point, for example, 1.0 or 1.2. An integer part represents major version, which is a numerical value to be updated when an extensive modification should be made for extensively improving functions or for repairing a number of defects, for example. On the other hand, the one digit below the decimal point represents minor version, which is a numerical value to be updated when specification is slightly modified without influencing the function or operability, or when an inconvenience is amended. In this embodiment, in case where the major versions represented by the integer part are consistent between the control unit software and the TP software, it is defined that the consistency of the versions of both the software is normal. This method of definition is only an example, and there are some other methods of definition. For example, it is determined that the consistency of the versions is normal, only when the control unit software and the TP software are completely consistent with each other in both the major version represented by the integer part and the minor version represented by the one digit below the decimal point.

At step 401 of the flow in Fig. 4, the version information of the control unit software will be stored in a variable A, while the version information of the TP software will be stored in a variable B. In this embodiment, the variables such as the variable A and variable B are memories which are prepared as temporary data in a register memory (not shown) in the CPU 103 or in the RAM 106 of the control unit 102.

Then, at step 402 of the flow in Fig. 4, the integer part of the variable A, that is, the major version information only will be stored in a variable INT_ A, and the integer part of the variable B will be stored in a variable INT_B in the same manner. Then, the INT_ A and the INT_ B will be compared at step 403. Because the INT_A and the INT _ B correspond to the major version information, it is determined that the version consistency is normal, when the INT_ A is consistent with the INT_B, and it is determined that the version consistency is abnormal, when the INT_ A is inconsistent with the INT_B.

### (Embodiment 2)

The best mode for carrying out the invention will be described referring to Figs. 1, 2, 3 and 5. In this embodiment, components which are substantially the same as in Embodiment 1 will be denoted with the same reference numerals or signs, and detailed description of the components will be omitted.

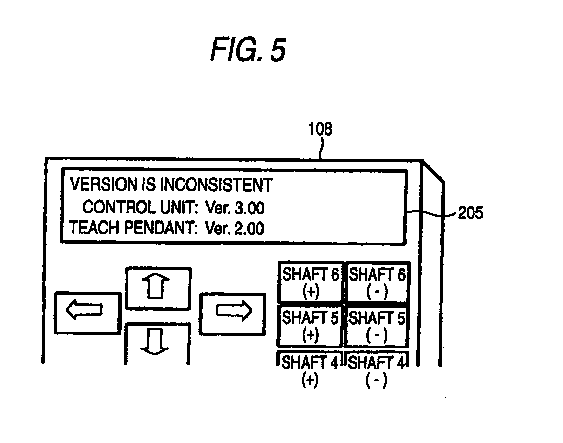

After the version consistency has been checked whether normal or abnormal in the flow in Fig. 3, in case where the version consistency has been determined as abnormal, the CPU 103 in the control unit 102 will transmit a command for displaying the abnormal consistency to the teach pendant 108 via the control unit communication part 104. The TP-CPU 201 in the teach pendant 108 will receive the command for displaying the abnormal consistency via the TP communication part 204, and will display, in the display part 205, an abnormal state of the version consistency. Fig. 5 shows an example in which the abnormal state of the version consistency is displayed as an abnormal message in the display part 205 of the teach pendant 108. In this example, there are illustrated the inconsistent state of the version, and the version information of both the control unit 102 and the teach pendant 108, and it is clearly announced to the operator that the inconsistent state of the version has occurred.

### (Embodiment 3)

The best mode for carrying out the Invention will be described referring to Figs. 1, 2, 6, 7 and 8. In this embodiment, components which are substantially the same as in Embodiment 1 will be denoted with the same reference numerals or signs, and detailed description of the components will be omitted. In this embodiment, the ROM 105 of the control unit 102 and TP-ROM 202 of the teach pendant 108 are rewritable, and both the control unit software and the TP software are stored as a pair.

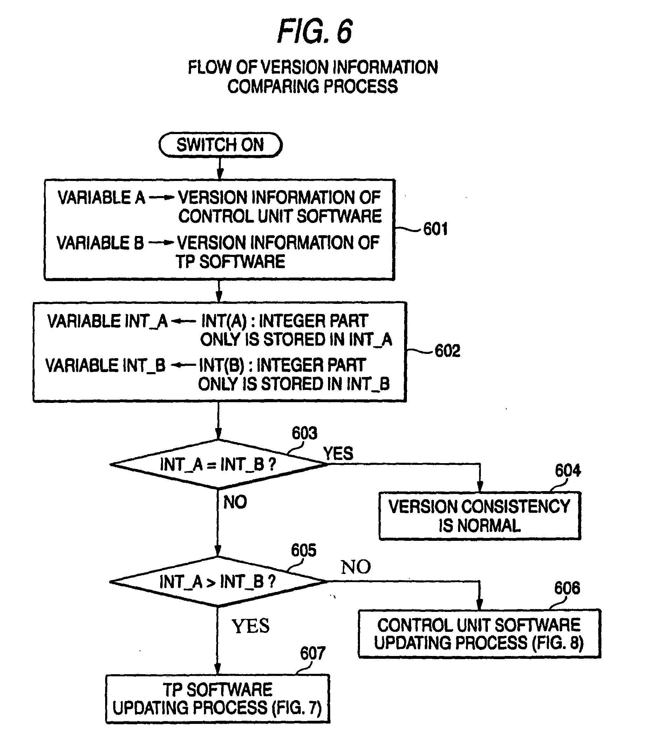

At step 601 of a flow in Fig. 6, the version information of the control unit software will be stored in a variable A, while the version information of the TP software will be stored in a variable B. Then, at step 602 of the flow, an integer part of the variable A, that is, the major version only will be stored in a variable INT_A, and an integer part of the variable B will be stored in a variable INT_B. Then, the INT_ A and the INT_ B will be compared at step 603. Because the INT_ A and the INT_ B correspond to the major version information, it is determined that the version consistency is abnormal, in case where the INT_A is inconsistent with the INT_B, and the flow will proceed to step 605. At the step 605, whether or not the INT_A is larger than the INT_B will be judged. Specifically, in this judging process, whether or not the version information of the control unit software is newer than the version information of the TP software will be judged. In case where the version information of the control unit software is newer than the version information of the TP software, the flow will proceed to the TP software updating process at step 607 for renewing the version of the TP software, because the version of the TP software is old. In case where the version information of the control unit software is older than the version information of the TP software, the flow will proceed to the control unit software updating process at step 606 for renewing the version of the control unit software, because the version of the control unit software is old.

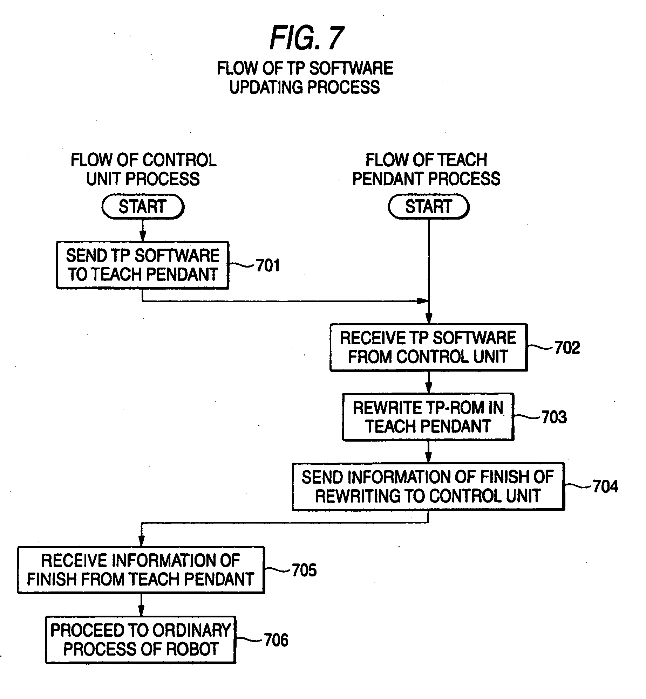

Now, the TP software updating process at the step 607 will be described referring to Fig. 7. At step 701 of the flow, the CPU 103 in the control unit 102 will transmit the TP software stored in the control unit 102 to the teach pendant 108 via the control unit communication part 104. Then, at step 702, the TP-CPU 201 in the teach pendant 108 will receive the TP software transmitted from the control unit 102, via the TP communication part 204. At step 703, the TP-CPU 201 will conduct process for rewriting the TP-ROM 202 according to the TP software which has been received. Then, at step 704, the TP-CPU 201 will transmit information that the rewriting process of the TP-ROM 202 has finished, to the control unit 102 via the TP communication part 204. At step 705, the CPU 103 in the control unit 102 will receive the information of the finish of the rewriting process via the control unit communication part 104. Thereafter, at step 706, the flow will proceed to ordinary process of the robot. The ordinary process of the robot means a series of processes in which ordinary teaching operation and driving operation can be made, because it has been determined that the version information is consistent between the control unit software and the TP software.

Through the TP software updating process as described above, in case where the TP software has been judged as of the older version than the control unit software, it is possible to make the consistency between the software in the control unit and the software in the teach pendant normal, by performing the rewriting process of the software in the teach pendant, utilizing the TP software which is stored in the control unit.

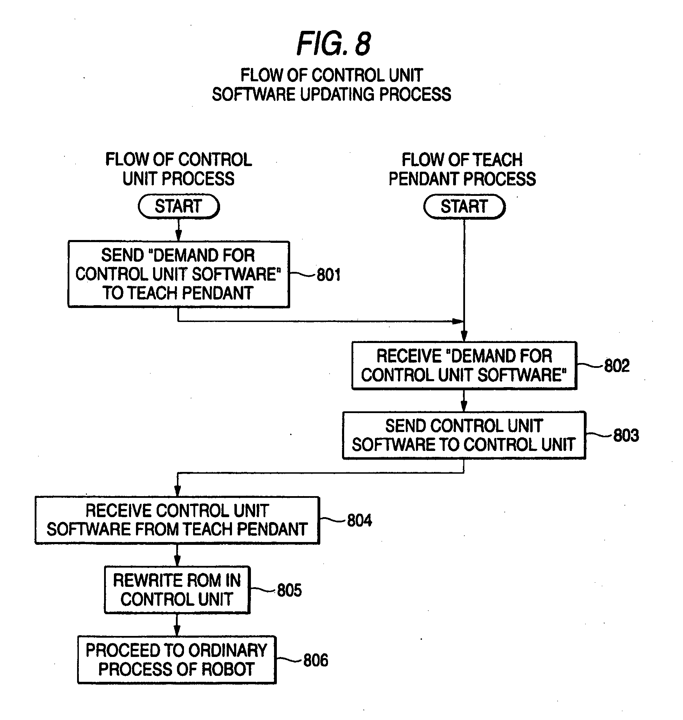

Then, the control unit software updating process at the step 606 will be described referring to Fig. 8. At step 801 of the flow, the CPU 103 in the control unit 102 will transmit a demand for the control unit software to the teach pendant 108 via the control unit communication part 104. Then, at step 802, the TP-CPU 201 in the teach pendant 108 will receive the demand for the control unit software via the TP communication part 204. Then, at step 803, the TP-CPU 201 in the teach pendant 108 will transmit the control unit software to the control unit 102 via the TP communication part 204. Then, at step 804, the CPU 103 in the control unit 102 will receive the control unit software via the control unit communication part 104. At the next step 805, the CPU 103 will conduct process for rewriting the ROM 105 according to the control unit software which has been received. Thereafter, at step 806, the CPU 103 in the control unit 102 will proceed to the ordinary process of the robot. The ordinary process of the robot means a series of processes in which ordinary teaching operation and driving operation can be made, because it has been determined that the version information is consistent between the control unit software and the TP software.

Through the updating process of the control unit software as described above, in case where the control unit software has been judged as of older version than the TP software, it is possible to make the consistency between the software in the control unit and the software in the teach pendant normal, by performing the rewriting process of the software in the control unit, utilizing the control unit software which is installed in the teach pendant.

### (Embodiment 4)

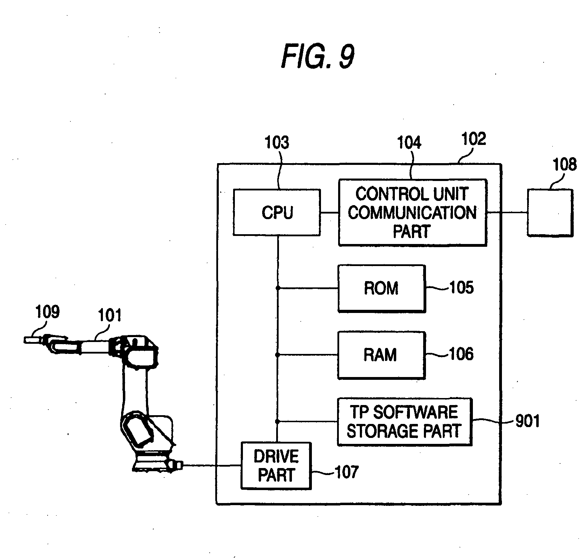

The best mode for carrying out the Invention will be described referring to Fig. 9. In this embodiment, components which are substantially the same as in Embodiment 1 and Embodiment 3 will be denoted with the same reference numerals or signs, and detailed description of the components will be omitted.

In Fig. 9, a TP software storage part 901 for storing the TP software is provided in the control unit 102. At the step 701 of the flow in Embodiment 3, the CPU 103 in the control unit 102 will perform process for transmitting the TP software which is stored in the control unit 102 to the teach pendant 108 via the control unit communication part 104. However, in this embodiment, the TP software which is stored in the control unit 102 has been stored in the TP software storage part 901 in advance. The TP software may be written into the TP software storage part 901 when the robot is manufactured in a factory. Alternatively, during updating process of the control unit software at the step 606 in Fig. 6, the TP software may be also transmitted, accompanying the control unit software which is transmitted to the control unit 102 from the teach pendant 108, and will be written into the TP software storage part 901.

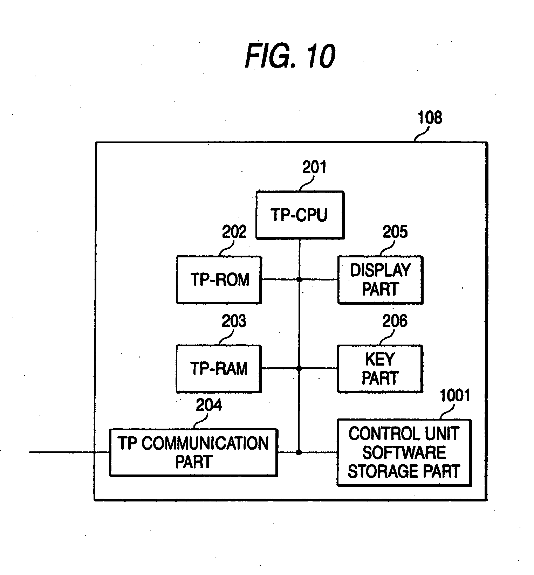

In Fig. 10, a control unit software storage part 1001 for storing the control unit software is provided in the teach pendant 108. At the step 803 of the flow in Embodiment 3, the TP-CPU 201 in the teach pendant 108 will perform process for transmitting the control unit software which is stored in the teach pendant 108 to the control unit 102 via the TP communication part 204. However, in this embodiment, the control unit software which is stored in the teach pendant 108 has been stored in the control unit software storage part 1001 in advance. The control unit software may be written into the control unit software storage part 1001 when the robot is manufactured in a factory. Alternatively, during updating process of the TP software at the step 607 in Fig. 6, the control unit software may be also transmitted, accompanying the TP software which is transmitted to the teach pendant 108 from the control unit 102, and will be written into the control unit software storage part 1001.

This application is based on Japanese Patent application No. 2004-103789 filed on March 31, 2004.

### Industrial Applicability

According to the invention, it is possible to prevent increases of working cost and downtime of production line, and the invention would be industrially useful as an industrial robot.

## Claims

1. An industrial robot comprising:
a teach pendant (108) operated by a software for the teach pendant for operating the robot,
a control unit (102) operated by a software for the control unit for controlling the robot in its entirety to which said teach pendant (108) and a manipulator (101) are connected, and
consistency judging means(1030) for judging whether or not the software for the teach pendant in said teach pendant (108) is consistentin version with the software for the control unit in said control unit (102), wherein
said teach pendant (108) and said control unit (102) are respectively provided with storage parts (105, 202) for previously storing the software of each other, and
in case where inconsistency has been determined by said consistency judging means (1030), the software for the control unit (102) is transferred from said teach pendant (108) to said control unit (102), or the software for the teach pendant (108) is transferred from said control unit (102) to said teach pendant (108), whereby the software of at least one of said teach pendant (108) and said control unit (102) is updated.

2. An industrial robot as claimed in claim 1, wherein in case where inconsistency has been determined by said consistency judging means (1030), a state of inconsistency is displayed in said teach pendant (108).

3. A method of controlling an industrial robot provided with a teach pendant (108) operated by a software for the teach pendent for operating the robot, and a control unit operated by a software for the control unit for controlling the robot in its entirety to which said teach pendant (108) and a manipulator(101) are connected,wherein said teach pendant (108) and said control unit (102) are respectively provided with storage parts (105, 202) for previously storing the software of each other said method comprising:
a step (301) of reading version information of software for the control unit,
a step (307) of reading version information of software for the teach pendant, and
a step (303) of comparing the version information of the software for the control unit in the control unit (102) and the version information of the software for the teach pendant in the teach pendant (108) thereby to check consistency between them,
wherein in case where inconsistency has been determined (304: ABNORMAL), the software for the control unit is transferred (803) from said teach pendant (108) to said control unit (102), or the software for the teach pendant is transferred from said control unit (102) to said teach pendant (108), whereby the software of at least one of said teach pendant (102) and said control unit (108) is updated.

4. A method of controlling an industrial robot as claimed in claim 3, wherein when inconsistency has been determined (304: ABNORMAL), a state of inconsistency is displayed in said teach pendant (108).

## Patentansprüche

1. Industrieroboter, umfassend:
ein Programmierhandgerät (108), betrieben mittels einer Software für das Programmhandgerät, zum Betreiben des Roboters,
eine Steuereinheit (102), betrieben mittels einer Software für die Steuereinheit, zum Steuern des Roboters in seiner Gesamtheit, womit das Programmierhandgerät (108) und ein Manipulator (101) verbunden sind, und
eine Konsistenzbeurteilungseinrichtung (1030) zum Beurteilen, ob die Software für das Programmierhandgerät in dem Programmierhandgerät (108) in ihrer Version konsistent ist mit der Software für die Steuereinheit in der Steuereinheit (102), wobei das Programmierhandgerät (108) und die Steuereinheit (102) jeweils mit Speicherteilen (105, 202) zum gegenseitigen Vorab-Speichern der Software ausgerüstet sind, und
falls von der Konsistenzbeurteilungseinrichtung (1030) eine Inkonsistenz festgestellt worden ist, die Software für die Steuereinheit (102) von dem Programmierhandgerät (108) an die Steuereinheit (102) übertragen wird, oder die Software für das Programmierhandgerät (108) von der Steuereinheit (102) an das Programmierhandgerät (108) übertragen wird, wodurch die Software wenigstens des Programmierhandgeräts (108) oder der Steuereinheit (102) aktualisiert wird.

2. Industrieroboter nach Anspruch 1, wobei, falls von der Konsistenzbeurteilungseinrichtung (1030) eine Inkonsistenz festgestellt wurde, ein Inkonsistenzzustand an dem Programmierhandgerät (108) angezeigt wird.

3. Verfahren zum Steuern eines Industrieroboters, ausgerüstet mit einem Programmierhandgerät (108), betrieben mittels einer Software für das Programmierhandgerät, zum Betreiben des Roboters, und einer Steuereinheit, betrieben mittels einer Software für die Steuereinheit, zum Steuern des Roboters in seiner Gesamtheit, womit das Programmierhandgerät (108) und ein Manipulator (101) verbunden sind, wobei das Programmierhandgerät (108) und die Steuereinheit (102) jeweils mit Speicherteilen (105, 202) zum gegenseitigen Vorab-Speichern der Software ausgerüstet sind und wobei das Verfahren umfasst:
einen Schritt (301) des Lesens von Versionsinformation von Software für die Steuereinheit,
einen Schritt (307) des Lesens von Versionsinformation von Software für das Programmierhandgerät, und
einen Schritt (303) des Vergleichens der Versionsinformation der Software für die Steuereinheit in der Steuereinheit (102) und der Versionsinformation der Software für das Programmierhandgerät in dem Programmierhandgerät (108), wodurch die Konsistenz zwischen ihnen überprüft wird,
wobei, falls Inkonsistenz festgestellt wurde (304: ABNORMAL), die Software für die Steuereinheit von dem Programmierhandgerät (108) an die Steuereinheit (102) übertragen (803) wird, oder die Software für das Programmierhandgerät von der Steuereinheit (102) an das Programmierhandgerät (108) übertragen wird, wodurch die Software wenigstens des Programmierhandgeräts (102) oder der Steuereinheit (108) aktualisiert wird.

4. Verfahren zum Steuern eines Industrieroboters nach Anspruch 3, wobei, wenn Inkonsistenz festgestellt wurde (304: ABNORMAL), ein Inkonsistenzzustand an dem Programmierhandgerät (108) angezeigt wird.

## Revendications

1. Robot industriel comprenant :
une console d'apprentissage (108) commandée par un logiciel pour la console d'apprentissage afin de commander le robot,
une unité de contrôle (102) commandée par un logiciel pour l'unité de contrôle afin de contrôler entièrement le robot auquel ladite console d'apprentissage (108) et un manipulateur (101) sont connectés, et
un moyen d'évaluation de cohérence (1030) pour évaluer si la version du logiciel pour la console d'apprentissage dans ladite console d'apprentissage (108) est cohérente ou non avec la version du logiciel pour l'unité de contrôle dans ladite unité de contrôle (102), dans lequel
ladite console d'apprentissage (108) et ladite unité de contrôle (102) sont respectivement pourvues d'éléments de stockage (105, 202) pour stocker préalablement leurs logiciels mutuels, et
dans le cas où une incohérence a été déterminée par ledit moyen d'évaluation de cohérence (1030), le logiciel pour l'unité de contrôle (102) est transféré depuis ladite console d'apprentissage (108) vers ladite unité de contrôle (102), ou le logiciel pour la console d'apprentissage (108) est transféré depuis ladite unité de contrôle (102) vers ladite console d'apprentissage (108), moyennant quoi le logiciel d'au moins un élément parmi ladite console d'apprentissage (108) et ladite unité de contrôle (102) est mis à jour.

2. Robot industriel selon la revendication 1 dans lequel, dans le cas où une incohérence a été déterminée par ledit moyen d'évaluation de cohérence (1030), un état d'incohérence est affiché sur ladite console d'apprentissage (108).

3. Procédé de contrôle d'un robot industriel pourvu d'une console d'apprentissage (108) commandée par un logiciel pour la console d'apprentissage afin de commander le robot, et d'une unité de contrôle commandée par un logiciel pour l'unité de contrôle afin de contrôler entièrement le robot auquel ladite console d'apprentissage (108) et un manipulateur (101) sont connectés, dans lequel ladite console d'apprentissage (108) et ladite unité de contrôle (102) sont respectivement pourvues d'éléments de stockage (105, 202) pour stocker préalablement leurs logiciels mutuels, ledit procédé comprenant :
une étape (301) de lecture de l'information de version du logiciel pour l'unité de contrôle,
une étape (307) de lecture de l'information de version du logiciel pour la console d'apprentissage, et
une étape (303) de comparaison de l'information de version du logiciel pour l'unité de contrôle dans l'unité de contrôle (102) avec l'information de version du logiciel pour la console d'apprentissage dans la console d'apprentissage (108) pour ainsi vérifier leur cohérence mutuelle,
dans lequel, dans le cas où une incohérence a été déterminée (304: ABNORMAL), le logiciel pour l'unité de contrôle est transféré (803) depuis ladite console d'apprentissage (108) vers ladite unité de contrôle (102), ou le logiciel pour la console d'apprentissage est transféré depuis ladite unité de contrôle (102) vers ladite console d'apprentissage (108), moyennant quoi le logiciel d'au moins un élément parmi ladite console d'apprentissage (102) et ladite unité de contrôle (108) est mis à jour.

4. Procédé de contrôle d'un robot industriel selon la revendication 3 dans lequel, lorsqu'une incohérence a été déterminée (304: ABNORMAL), un état d'incohérence est affiché sur ladite console d'apprentissage (108).
